# EUROPÄISCHE PATENTSCHRIFT

(11) **EP 3 715 150 B1**
(45) Veröffentlichungstag und Bekanntmachung des Hinweises auf die Patenterteilung: **23.10.2024**
(21) Anmeldenummer: 20154471.5
(22) Anmeldetag: 30.01.2020
(51) Int. Cl.: B60C 23/00, B60C 23/04

(54) **SYSTEM UND VERFAHREN ZUR KONTROLLE EINES REIFENDRUCKS**
SYSTEM AND METHOD FOR CONTROLLING TYRE PRESSURE
SYSTÈME ET PROCÉDÉ DE CONTRÔLE DE LA PRESSION D'UN PNEU

(30) Priorität: 27.03.2019 DE 102019204229
(43) Veröffentlichungstag der Anmeldung: 30.09.2020
(73) Patentinhaber: Continental Reifen Deutschland GmbH, 30175 Hannover (DE)
(72) Erfinder: James, Akhil - c/o Continental AG, 30419 Hannover (DE)
(74) Vertreter: Continental Corporation

(56) Entgegenhaltungen:
- EP-A1- 1 318 033
- EP-A1- 2 551 130
- KR-A- 20160 088 082
- KR-B1- 101 490 920

## Beschreibung

Die vorliegende Erfindung bezieht sich auf ein System und auf ein Verfahren.

Die vorliegende Erfindung geht aus von einem System zur Kontrolle eines Reifeninnendrucks. Das System weist eine Sensorvorrichtung auf, wobei die Sensorvorrichtung zur Erfassung eines Reifeninnendruckes vorgesehen ist. Das System weist eine zentrale Steuereinheit, eine Telematik-Vorrichtung und eine Auswertevorrichtung auf. Dabei ist die Telematik-Vorrichtung zur Informationsverarbeitung und zur Informationsübertragung vorgesehen. Die Auswertevorrichtung ist insbesondere zu einer Auswertung von Daten vorgesehen.

Aus dem Stand der Technik sind Systeme zur Kontrolle eines Reifeninnendruckes bekannt, beispielsweise aus der KR 101490920B1.

Dabei ist es aus dem Stand der Technik auch bekannt, mittels der Systeme einen Reifeninnendruck in Abhängigkeit des Einsatzortes des Reifens zu bewerten. So kann es beispielsweise erforderlich sein, für verschiedene Bereiche, auf denen ein Reifen abrollt, unterschiedliche Reifeninnendrücke vorzusehen und einzustellen. Beispielsweise kann ein optimaler Reifeninnendruck auf einem unebenen Gelände ein anderer sein, als es ein optimaler Reifeninnendruck auf einer asphaltierten und ebenen Straße ist. Für den Fall, wonach für verschiedene Bereiche, auf denen ein Reifen abrollt, unterschiedliche Reifeninnendrücke vorgesehen sind, kann es demnach sinnvoll sein, einen aktuellen Reifeninnendruck in Abhängigkeit des Einsatzortes des Reifens zu bewerten.

Bei den aus dem Stand der Technik bekannten Systemen zur Kontrolle eines Reifeninnendruckes könnte eine Einstellung eines Reifeninnendruckes und die Kontrolle eines Reifeninnendruckes durch einen Führer eines Fahrzeugs, dessen Reifen überwacht werden sollen, erforderlich sein.

Diese Überwachung des Reifeninnendruckes in Abhängigkeit von Bodenbeschaffenheiten durch den Fahrzeugführer könnte für den Fahrzeugführer mit erhöhtem Aufwand verbunden sein.

Der Erfindung liegt daher die Aufgabe zugrunde, ein System zur Kontrolle eines Reifeninnendruckes bereitzustellen, mit dem auf vereinfachte und zuverlässige Weise ein Sollreifeninnendruck oder ein gewünschter Reifeninnendruck einem Fahrzeuguntergrund zugeordnet werden kann.

Gelöst wird die gestellte Aufgabe erfindungsgemäß dadurch, dass die Telematik-Vorrichtung zum Empfangen von Signalen eines globalen Navigationssatellitensystems eingerichtet ist und zu einem Austausch von Daten und Signalen mit der Auswertevorrichtung eingerichtet ist, wobei mittels der Telematik-Vorrichtung die Positionsdaten der Sensorvorrichtung anhand der Signale bestimmt werden können, und wobei die Auswertevorrichtung eingerichtet ist, den Positionsdaten der Sensorvorrichtung einen eindeutigen Solldruckwertebereich zuzuordnen.

Durch den erfindungsgemäßen Umstand, wonach die Telematik-Vorrichtung zum Empfang von Signalen eines globalen Navigationssatellitensystems eingerichtet ist und zu einem Austausch von Daten und Signalen mit der Auswertevorrichtung eingerichtet ist, wobei mittels der Telematik-Vorrichtung, die Positionsdaten der Sensorvorrichtung anhand der Signale bestimmt werden können, und wobei die Auswertevorrichtung eingerichtet ist, den Positionsdaten des Sensorvorrichtung einen eindeutigen Solldruckwertebereich zuzuordnen, wird ein System bereitgestellt, bei dem automatisiert einem bestimmten Fahrbahnuntergrund, der mit den Positionsdaten der Sensorvorrichtung innerhalb eines Reifens einhergeht, ein Solldruckwertbereich zugeordnet werden kann. Dadurch kann ein Reifeninnendruck an eine Bodenbeschaffenheit automatisiert angepasst werden.

Somit wird ein verbessertes System zur Kontrolle eines Reifeninnendruckes mit den Merkmalen des Anspurchs 1 bereitgestellt.

Die Erfindung betrifft ferner ein Verfahren mit den Merkmalen des Anspruchs 5.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung weist das System eine Warnvorrichtung auf. Dabei ist die Warnvorrichtung eingerichtet, in Abhängigkeit eines Signales der Auswertevorrichtung ein akustisches oder optisches Warnsignal auszugeben.

Durch den erfindungsgemäßen Umstand, wonach das System eine Warnvorrichtung aufweist, wobei die Warnvorrichtung eingerichtet ist, in Abhängigkeit eines Signales der Auswertevorrichtung ein akustisches oder optisches Warnsignal auszugeben, kann ein Fahrzeugführer des Fahrzeugs, dessen Reifen hinsichtlich ihres jeweiligen Reifeninnendruckes überwacht werden, unmittelbar auf eine solche Situation hingewiesen werden, in der beispielsweise ein zu hoher oder ein zu niedriger Reifeninnendruck gegeben ist.

Ein zu hoher oder ein zu niedriger Reifeninnendruck ist gegeben, wenn der gemessene Reifeninnendruck außerhalb des ihm zugeordneten Solldruckwertbereichs liegt.

Gemäß einer nächsten vorzugsweisen Ausgestaltungsform der vorliegenden Erfindung weist das System eine Sendevorrichtung auf. Dabei ist die Sendevorrichtung dazu eingerichtet, ein Referenzsignal zu senden, wobei es sich um ein solches Referenzsignal handelt, das von der Telematik-Vorrichtung empfangen werden kann und wobei das Referenzsignal zur Bestimmung einer Raumposition der Sensorvorrichtung verwendet werden kann, wobei die Telematik-Vorrichtung eingerichtet ist, die Positionsdaten der Sensorvorrichtung mit der, mittels des Referenzsignals bestimmten, Raumposition der Sensorvorrichtung zu vergleichen.

Gemäß einer nächsten vorzugsweisen Ausgestaltungsform der vorliegenden Erfindung weist das System eine Druckveränderungsvorrichtung auf. Dabei ist die Druckveränderungsvorrichtung dazu eingerichtet, einen Druck in einem Luftreifen zu ändern. Dabei ist die Druckveränderungsvorrichtung insbesondere eingerichtet, den Reifeninnendruck in Abhängigkeit eines Signals der Telematik-Vorrichtung zu verändern.

Ferner kann die Druckveränderungsvorrichtung insbesondere für den Fall, wonach das System eine Computernetzwerkvorrichtung aufweist, eingerichtet sein, den Reifeninnendruck in Abhängigkeit eines Signals der Computernetzwerkvorrichtung zu verändern.

Die Computernetzwerkvorrichtung kann auch als Computer-Cloud bezeichnet werden. Bei der Druckveränderungsvorrichtung kann es sich beispielsweise um eine Vorrichtung handeln, mit der ein Luftdruck innerhalb des Reifens erhöht oder verringert wird.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1:: Eine schematische Darstellung eines erfindungsgemäßen Systems;
- Fig. 2:: Eine schematische Darstellung eines erfindungsgemäßen Systems gemäß einer Ausführungsform.

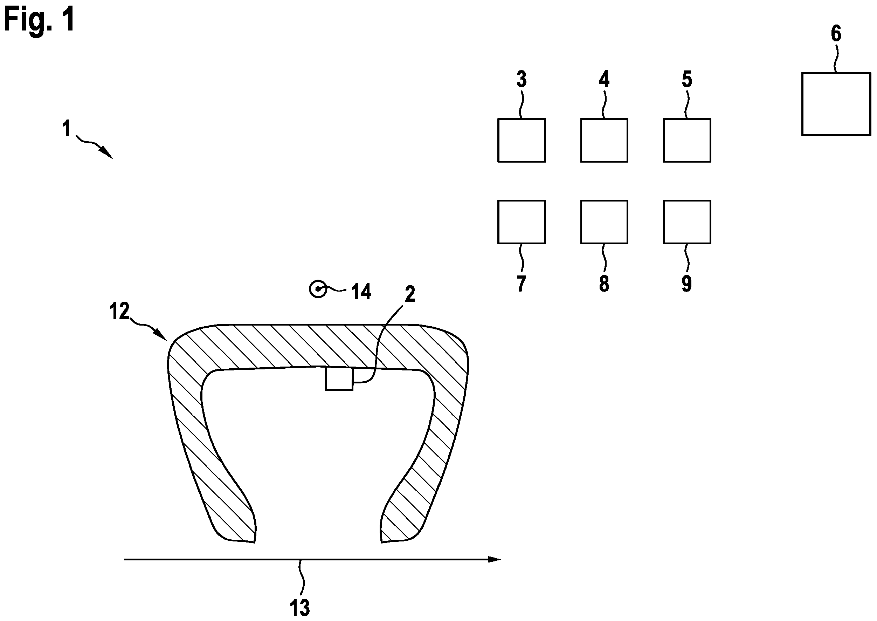

In der Figur 1 ist ein erfindungsgemäßes System 1 zur Kontrolle eines Reifeninnendruckes eines Reifens 12 schematisch dargestellt. Der Reifen 12 ist in Radialschnittansicht dargestellt um eine Rotationsachse 13 in eine Umlaufrichtung 14 rotierbar. Das System 1 weist eine Sensorvorrichtung 2 auf, wobei die Sensorvorrichtung 2 zur Erfassung eines Reifeninnendruckes vorgesehen ist. Das System 1 weist ferner eine zentrale Steuereinheit 3, eine Telematik-Vorrichtung 4, wobei die Telematik-Vorrichtung 4 zur Informationsverarbeitung und zur Informationsübertragung vorgesehen ist, und eine Auswertevorrichtung 5 auf.

Die Telematik-Vorrichtung 4 ist zum Empfang von Signalen eines globalen Navigationssatellitensystems 6 eingerichtet. Die Telematik-Vorrichtung 4 ist ferner zu einem Austausch von Daten und Signalen mit der Auswertevorrichtung 5 eingerichtet. Dabei können mittels der Telematik-Vorrichtung 4 die Positionsdaten des Sensorvorrichtung 2 anhand der Signale bestimmt werden. Die Auswertevorrichtung 5 ist dabei dazu eingerichtet, den Positionsdaten der Sensorvorrichtung 2 einen eindeutigen Solldruck zuzuordnen.

Insbesondere weist das System 1 eine Warnvorrichtung 7 auf. Die Warnvorrichtung 7 ist eingerichtet, in Abhängigkeit eines Signals der Auswertevorrichtung 5 ein akustisches oder optisches Warnsignal auszugeben.

Ferner weist das System 1 insbesondere eine Computernetzwerkvorrichtung 8 auf. Die Computernetzwerkvorrichtung 8 ist eingerichtet, mit der Telematik-Vorrichtung 4, Daten und Signale auszutauschen. Die Computernetzwerkvorrichtung 8 ist ferner eingerichtet, die Daten und Signale zu verarbeiten und zu analysieren, wobei die Computernetzwerkvorrichtung 8 eingerichtet ist, die Daten oder die verarbeiteten Daten an eine weitere Vorrichtung 9 zu übertragen.

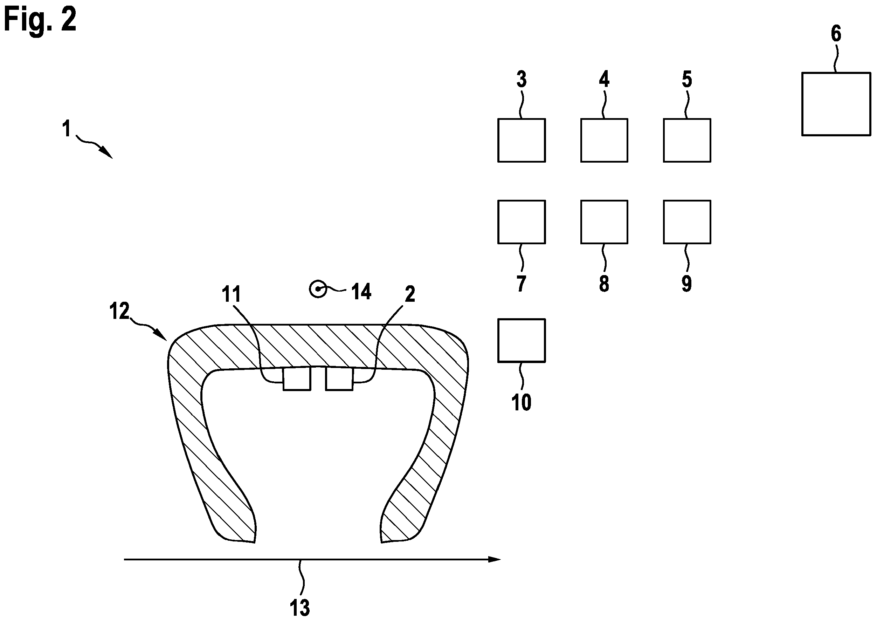

In der Figur 2 ist ein erfindungsgemäßes System 1 gemäß einer Ausführungsform schematisch dargestellt. Gemäß der Darstellung in der Figur 2 weist das System 1 eine Sendevorrichtung 10 auf.

Dabei ist die Sendevorrichtung 10 dazu eingerichtet, ein Referenzsignal zu senden, wobei es sich um ein solches Referenzsignal handelt, das von der Telematik-Vorrichtung 4 empfangen werden kann und das Referenzsignal zur Bestimmung einer Raumposition der Sensorvorrichtung 2 verwendet werden kann, wobei die Telematik-Vorrichtung 4 eingerichtet ist, die Positionsdaten der Sensorvorrichtung 2 mit der mittels des Referenzsignals bestimmten Raumposition der Sensorvorrichtung 2 zu vergleichen.

Gemäß der Darstellung in der Figur 2 weist das erfindungsgemäße System 1 insbesondere eine Druckveränderungsvorrichtung 11 auf. Die Druckveränderungsvorrichtung 11 ist dazu eingerichtet, einen Druck in einem Reifen 12 zu verändern.

### Bezugszeichenliste

### (ist Teil der Beschreibung)

- 1: System
- 2: Sensorvorrichtung
- 3: Zentrale Steuereinheit
- 4: Telematik-Vorrichtung
- 5: Auswertevorrichtung
- 6: Globales Navigationssatellitensystem
- 7: Warnvorrichtung
- 8: Computernetzwerkvorrichtung
- 9: Weitere Vorrichtung
- 10: Sendevorrichtung
- 11: Druckveränderungsvorrichtung
- 12: Reifen
- 13: Rotationsachse
- 14: Umlaufrichtung

## Patentansprüche

1. System (1) zur Kontrolle eines Reifeninnendrucks, aufweisend eine Sensorvorrichtung (2), wobei die Sensorvorrichtung (2) zur Erfassung eines Reifeninnendrucks vorgesehen ist, eine zentrale Steuereinheit (3), eine Telematik-Vorrichtung (4), wobei die Telematik-Vorrichtung (4) zur Informationsverarbeitung und zur Informationsübertragung vorgesehen ist, und eine Auswertevorrichtung (5), wobei die Telematik-Vorrichtung (4) zum Empfang von Signalen eines globalen Navigationssatellitensystems (6) eingerichtet ist und zu einem Austausch von Daten und Signalen mit der Auswertevorrichtung (5) eingerichtet ist, wobei mittels der Telematik-Vorrichtung (4) die Positionsdaten der Sensorvorrichtung (2) anhand der Signale bestimmt werden können, und wobei die Auswertevorrichtung (5) eingerichtet ist, den Positionsdaten der Sensorvorrichtung (2) einen eindeutigen Solldruckwertbereich zuzuordnen, **dadurch gekennzeichnet, dass** das System (1) eine Computer-Cloud (8) aufweist, wobei die Computer-Cloud (8) eingerichtet ist, mit der Telematik-Vorrichtung (4) Daten und Signale auszutauschen, wobei die Computer-Cloud (8) ferner eingerichtet ist, die Daten und Signale zu verarbeiten und zu analysieren und wobei die Computer-Cloud (8) eingerichtet ist, die Daten oder die verarbeiteten Daten an eine weitere Vorrichtung (9) zu übertragen.

2. System (1) nach Anspruch 1, aufweisend eine Warnvorrichtung (7), wobei die Warnvorrichtung (7) eingerichtet ist, in Abhängigkeit eines Signales der Auswertevorrichtung (5) ein akustisches oder optisches Warnsignal auszugeben.

3. System (1) nach einem der vorgehenden Ansprüche, aufweisend eine Sendevorrichtung (10), wobei die Sendevorrichtung (10) dazu eingerichtet ist, ein Referenzsignal zu senden, wobei es sich um ein solches Referenzsignal handelt, das von der Telematik-Vorrichtung (4) empfangen werden kann und das Referenzsignal zur Bestimmung einer Raumposition der Sensorvorrichtung (2) verwendet werden kann, wobei die Telematik-Vorrichtung (4) eingerichtet ist, die Positionsdaten der Sensorvorrichtung (2) mit der mittels des Referenzsignals bestimmten Raumposition der Sensorvorrichtung (2) zu vergleichen.

4. System (1) nach einem der vorhergehenden Ansprüche, aufweisend eine Druckveränderungsvorrichtung (11) wobei die Druckveränderungsvorrichtung (11) dazu eingerichtet ist, einen Druck in einem Luftreifen zu verändern, wobei die Druckveränderungsvorrichtung (11) insbesondere eingerichtet ist, den Reifeninnendruck in Abhängigkeit eines Signals der Telematik-Vorrichtung (4) zu verändern, oder die Druckveränderungsvorrichtung eingerichtet ist, den Reifeninnendruck in Abhängigkeit eines Signals der Computer-Cloud (8) zu verändern.

5. Verfahren, aufweisend die Schritte:
- Bereitstellen eines Systems (1) nach Anspruch 2;
- Ermitteln eines Reifeninnendruckes mittels der Sensorvorrichtung (2);
- Übertragen einer Information über den Reifeninnendruck an die zentrale Steuereinheit (3);
- Übertragen der Information an die Telematik-Vorrichtung (4);
- Empfangen eines Signals eines globalen Navigationssatellitensystems (6) mittels der Telematik-Vorrichtung (4);
- Bestimmung der räumlichen Position der Sensorvorrichtung (2) anhand des Signals;
- Eindeutiges Zuordnen eines Solldruckwertbereichs zu der räumlichen Position;
- Vergleichen des Reifeninnendruckes mit dem Solldruckwertbereich;
- Ausgabe eines Warnsignals für den Fall, dass der Reifeninnendruck außerhalb des Solldruckwertbereichs liegt, mittels der Warnvorrichtung (7), **gekennzeichnet durch** die Schritte:
- Bereitstellen einer Computer-Cloud (8), wobei die räumliche Position der Sensorvorrichtung (2) anhand des Signals mittels der Computer-Cloud (8) bestimmt wird;
- Eindeutiges Zuordnen des Solldruckwertbereichs zu der räumlichen Position mittels der Computer-Cloud (8);
- Vergleichen des Reifeninnendrucks mit dem Solldruckwertbereich mittels der Computer-Cloud (8).

6. Verfahren nach Anspruch 5, **dadurch gekennzeichnet, dass**:
- die räumliche Position der Sensorvorrichtung (2) anhand des Signals mittels der Telematik-Vorrichtung (4) bestimmt wird;
- der Solldruckwertbereich zu der räumlichen Position mittels der Telematik-Vorrichtung (4) eindeutig zugeordnet wird;
- der Reifeninnendruck mit dem Solldruckwertbereich mittels der Telematik-Vorrichtung (4) verglichen wird.

7. Verfahren nach Anspruch 6, **gekennzeichnet durch** die weiteren Schritte:
- Bereitstellen einer Sendevorrichtung (10);
- Aussenden eines Referenzsignals von der Sendevorrichtung (10);
- Empfangen des Referenzsignals durch die Telematik-Vorrichtung (4);
- Ermitteln der Raumposition der Sensorvorrichtung (2) in Abhängigkeit des Referenzsignals mittels der Telematik-Vorrichtung (4);
- Vergleichen Raumposition der Sensorvorrichtung (2) mit den Positionsdaten der Sensorvorrichtung (2) mittels der Computer-Cloud (8);
- Korrektur der Positionsdaten der Sensorvorrichtung (2) in Abhängigkeit des Vergleichs der Raumposition der Sensorvorrichtung (2) mittels der Telematik-Vorrichtung (4).

8. Verfahren nach Anspruch 6, **gekennzeichnet durch** die weiteren Schritte:
- Bereitstellen einer Sendevorrichtung (10);
- Aussenden eines Referenzsignals von der Sendevorrichtung (10);
- Empfangen des Referenzsignals durch die Computer-Cloud (8);
- Ermitteln der Raumposition der Sensorvorrichtung (2) in Abhängigkeit des Referenzsignals mittels der Computer-Cloud (8);
- Vergleichen der Raumposition der Sensorvorrichtung (2) mit den Positionsdaten der Sensorvorrichtung (2) mittels der Computer-Cloud (8);
- Korrektur der Positionsdaten der Sensorvorrichtung (2) in Abhängigkeit des Vergleichs der Raumposition der Sensorvorrichtung (2) mittels der Computer-Cloud (8).

9. Verfahren nach einem der Ansprüche 5 bis 8, **gekennzeichnet durch** die weiteren Schritte:
- Bereitstellen einer Druckveränderungsvorrichtung (11);
- Verändern eines Reifeninnendruckes mittels der Druckveränderungsvorrichtung (11) in Abhängigkeit des Vergleichens des Reifeninnendruckes mit dem Solldruckwertebereich.

## Claims

1. System (1) for monitoring a tyre internal pressure, having a sensor device (2), wherein the sensor device (2) is provided for detecting a tyre internal pressure, a central control unit (3), a telematics device (4), wherein the telematics device (4) is provided for processing and transmitting information, and an evaluation device (5), wherein the telematics device (4) is configured to receive signals from a global navigation satellite system (6) and is configured to exchange data and signals with the evaluation device (5), wherein the position data relating to the sensor device (2) can be determined by means of the telematics device (4) on the basis of the signals, and wherein the evaluation device (5) is configured to assign a unique target pressure value range to the position data relating to the sensor device (2), **characterized in that** the system (1) has a computer cloud (8), wherein the computer cloud (8) is configured to exchange data and signals with the telematics device (4), wherein the computer cloud (8) is also configured to process and analyse the data and signals, and wherein the computer cloud (8) is configured to transmit the data or the processed data to a further device (9).

2. System (1) according to Claim 1, having a warning device (7), wherein the warning device (7) is configured to output an acoustic or optical warning signal on the basis of a signal from the evaluation device (5).

3. System (1) according to one of the preceding claims, having a transmitting device (10), wherein the transmitting device (10) is configured to transmit a reference signal, wherein this is such a reference signal that can be received by the telematics device (4), and the reference signal can be used to determine a spatial position of the sensor device (2), wherein the telematics device (4) is configured to compare the position data relating to the sensor device (2) with the spatial position of the sensor device (2) determined using the reference signal.

4. System (1) according to one of the preceding claims, having a pressure change device (11), wherein the pressure change device (11) is configured to change a pressure in a pneumatic tyre, wherein the pressure change device (11) is configured, in particular, to change the tyre internal pressure on the basis of a signal from the telematics device (4), or the pressure change device is configured to change the tyre internal pressure on the basis of a signal from the computer cloud (8).

5. Method having the steps of:
- providing a system (1) according to Claim 2;
- determining a tyre internal pressure by means of the sensor device (2);
- transmitting information relating to the tyre internal pressure to the central control unit (3);
- transmitting the information to the telematics device (4);
- receiving a signal from a global navigation satellite system (6) by means of the telematics device (4);
- determining the spatial position of the sensor device (2) on the basis of the signal;
- uniquely assigning a target pressure value range to the spatial position;
- comparing the tyre internal pressure with the target pressure value range;
- outputting a warning signal, if the tyre internal pressure is outside the target pressure value range, by means of the warning device (7), **characterized by** the steps of:
- providing a computer cloud (8), wherein the spatial position of the sensor device (2) is determined on the basis of the signal by means of the computer cloud (8);
- uniquely assigning the target pressure value range to the spatial position by means of the computer cloud (8);
- comparing the tyre internal pressure with the target pressure value range by means of the computer cloud (8).

6. Method according to Claim 5, **characterized in that**:
- the spatial position of the sensor device (2) is determined on the basis of the signal by means of the telematics device (4);
- the target pressure value range is uniquely assigned to the spatial position by means of the telematics device (4);
- the tyre internal pressure is compared with the target pressure value range by means of the telematics device (4).

7. Method according to Claim 6, **characterized by** the further steps of:
- providing a transmitting device (10);
- emitting a reference signal from the transmitting device (10);
- receiving the reference signal by means of the telematics device (4);
- determining the spatial position of the sensor device (2) on the basis of the reference signal by means of the telematics device (4);
- comparing the spatial position of the sensor device (2) with the position data relating to the sensor device (2) by means of the computer cloud (8);
- correcting the position data relating to the sensor device (2) on the basis of the comparison of the spatial position of the sensor device (2) by means of the telematics device (4).

8. Method according to Claim 6, **characterized by** the further steps of:
- providing a transmitting device (10);
- emitting a reference signal from the transmitting device (10);
- receiving the reference signal by means of the computer cloud (8);
- determining the spatial position of the sensor device (2) on the basis of the reference signal by means of the computer cloud (8);
- comparing the spatial position of the sensor device (2) with the position data relating to the sensor device (2) by means of the computer cloud (8);
- correcting the position data relating to the sensor device (2) on the basis of the comparison of the spatial position of the sensor device (2) by means of the computer cloud (8).

9. Method according to one of Claims 5 to 8, **characterized by** the further steps of:
- providing a pressure change device (11);
- changing a tyre internal pressure by means of the pressure change device (11) on the basis of the comparison of the tyre internal pressure with the target pressure value range.

## Revendications

1. Système (1) de contrôle de la pression interne d'un pneu, comprenant un dispositif de détection (2), le dispositif de détection (2) étant prévu pour détecter la pression interne d'un pneu, une unité de commande centrale (3), un dispositif télématique (4), le dispositif télématique (4) étant prévu pour le traitement d'informations et la transmission d'informations, et un dispositif d'évaluation (5), le dispositif télématique (4) étant conçu pour recevoir des signaux d'un système global de navigation par satellite (6) et étant conçu pour un échange de données et de signaux avec le dispositif d'évaluation (5), les données de position du dispositif de détection (2) pouvant être déterminées à l'aide des signaux au moyen du dispositif télématique (4), et le dispositif d'évaluation (5) étant conçu pour associer une plage de valeurs de pression de consigne univoque aux données de position du dispositif capteur (2), **caractérisé en ce que** le système (1) possède un nuage informatique (8), le nuage informatique (8) étant conçu pour échanger des données et des signaux avec le dispositif télématique (4), le nuage informatique (8) étant en outre conçu pour traiter et analyser les données et les signaux, et le nuage informatique (8) étant conçu pour transmettre les données ou les données traitées à un dispositif supplémentaire (9).

2. Système (1) selon la revendication 1, possédant un dispositif d'avertissement (7), le dispositif d'avertissement (7) étant conçu pour délivrer un signal d'avertissement sonore ou visuel en fonction d'un signal du dispositif d'évaluation (5).

3. Système (1) selon l'une des revendications précédentes, possédant un dispositif d'émission (10), le dispositif d'émission (10) étant conçu pour émettre un signal de référence, celui-ci étant un signal de référence qui peut être reçu par le dispositif télématique (4) et le signal de référence pouvant être utilisé pour déterminer une position dans l'espace du dispositif de détection (2), le dispositif télématique (4) étant conçu pour comparer les données de position du dispositif de détection (2) avec la position dans l'espace du dispositif de détection (2) déterminée au moyen du signal de référence.

4. Système (1) selon l'une des revendications précédentes, possédant un dispositif de modification de la pression (11), le dispositif de modification de la pression (11) étant conçu pour modifier une pression dans un pneumatique, le dispositif de modification de la pression (11) étant notamment conçu pour modifier la pression interne du pneu en fonction d'un signal du dispositif télématique (4), ou le dispositif de modification de la pression étant conçu pour modifier la pression interne du pneu en fonction d'un signal du nuage informatique (8).

5. Procédé, comprenant les étapes suivantes :
- fourniture d'un système (1) selon la revendication 2 ;
- identification d'une pression interne du pneu au moyen du dispositif de détection (2) ;
- transmission d'une information à propos de la pression interne du pneu à l'unité centrale de commande (3) ;
- transmission de l'information au dispositif télématique (4) ;
- réception d'un signal d'un système global de navigation par satellite (6) au moyen du dispositif télématique (4) ;
- détermination de la position dans l'espace du dispositif de détection (2) à l'aide du signal ;
- association univoque d'une plage de valeurs de pression de consigne à la position dans l'espace ;
- comparaison de la pression interne du pneu avec la plage de valeurs de pression de consigne ;
- délivrance d'un signal d'avertissement dans le cas où la pression interne du pneu est en dehors de la plage de valeurs de pression de consigne, au moyen du dispositif d'avertissement (7), **caractérisé par** les étapes suivantes :
- fourniture d'un nuage informatique (8), la position dans l'espace du dispositif de détection (2) étant déterminée à l'aide du signal au moyen du nuage informatique (8) ;
- association univoque de la plage de valeurs de pression de consigne à la position dans l'espace au moyen du nuage informatique (8) ;
- comparaison de la pression interne du pneu avec la plage de valeurs de pression de consigne au moyen du nuage informatique (8).

6. Procédé selon la revendication 5, **caractérisé en ce que** :
- la position dans l'espace du dispositif de détection (2) est déterminée à l'aide du signal au moyen du dispositif télématique (4) ;
- la plage de valeurs de pression de consigne est associée de manière univoque à la position dans l'espace au moyen du dispositif télématique (4) ;
- la pression interne du pneu est comparée à la plage de valeurs de pression de consigne au moyen du dispositif télématique (4).

7. Procédé selon la revendication 6, **caractérisé par** les étapes supplémentaires suivantes :
- fourniture d'un dispositif d'émission (10) ;
- émission d'un signal de référence par le dispositif d'émission (10) ;
- réception du signal de référence par le dispositif télématique (4) ;
- identification de la position dans l'espace du dispositif de détection (2) en fonction du signal de référence au moyen du dispositif télématique (4) ;
- comparaison de la position dans l'espace du dispositif de détection (2) avec les données de position du dispositif de détection (2) au moyen du nuage informatique (8) ;
- correction des données de position du dispositif de détection (2) en fonction de la comparaison de la position dans l'espace du dispositif de détection (2) au moyen du dispositif télématique (4).

8. Procédé selon la revendication 6, **caractérisé par** les étapes supplémentaires suivantes :
- fourniture d'un dispositif d'émission (10) ;
- émission d'un signal de référence par le dispositif d'émission (10) ;
- réception du signal de référence par le nuage informatique (8) ;
- identification de la position dans l'espace du dispositif de détection (2) en fonction du signal de référence au moyen du nuage informatique (8) ;
- comparaison de la position dans l'espace du dispositif de détection (2) avec les données de position du dispositif de détection (2) au moyen du nuage informatique (8) ;
- correction des données de position du dispositif de détection (2) en fonction de la comparaison de la position dans l'espace du dispositif de détection (2) au moyen du nuage informatique (8).

9. Procédé selon l'une des revendications 5 à 8, **caractérisé par** les étapes supplémentaires suivantes :
- fourniture d'un dispositif de modification de la pression (11) ;
- modification d'une pression interne du pneu au moyen du dispositif de modification de la pression (11) en fonction de la comparaison de la pression interne du pneu avec la plage de valeurs de pression de consigne.
